# EUROPÄISCHE PATENTANMELDUNG

(11) **EP 4 803 799 A1**
(43) Veröffentlichungstag der Anmeldung: **09.09.2026**
(21) Anmeldenummer: 26160818.6
(22) Anmeldetag: 26.02.2026
(51) Int. Cl.: F16P 3/14, F16M 11/06, F16M 11/24, F16M 11/42

(54) **MOBILER SICHERHEITSSTÄNDER FÜR EINE MOBILE SICHERHEITS-LICHTSCHRANKE, MOBILES BAUSYSTEM UND VERFAHREN ZUM BETRIEB DES MOBILEN BAUSYSTEMS**

(30) Priorität: 07.03.2025 DE 102025108648
(71) Anmelder: Baubot GmbH, 1100 Wien (AT)
(72) Erfinder: Lang, Patrick, 1140 Wien (AT); Frühwirth, Georg, 1030 Wien (AT); Senoner, Damian, 1100 Wien (AT); Rodionov, Victor, 1040 Wien (AT)
(74) Vertreter: Suchy, Ulrich Johannes

(57) **Zusammenfassung**

Die Erfindung betrifft einen mobilen Sicherheitsständer (1) für eine mobile Sicherheits-Lichtschranke (2), aufweisend:
- eine Basis (3) mit mindestens einem Rad (4) zum Bewegen des mobilen Sicherheitsständers (1) auf einer Fläche;
- ein Trägergestell (5), das an der Basis (3) befestigt ist;
- eine Emittereinheit (6), insbesondere mit einem Laserstrahler, die zum Aussenden elektromagnetischer Strahlung ausgebildet ist, wobei die Emittereinheit (6) an dem Trägergestell (5) angeordnet ist, wobei die Emittereinheit (6) gegenüber dem Trägergestell (5) schwenkbar ist; und/oder
- eine Empfängereinheit (7), die zum Empfangen elektromagnetischer Strahlung konfiguriert ist, wobei die Empfängereinheit (7) an dem Trägergestell (5) angeordnet ist, wobei die Empfängereinheit (7) in Bezug auf das Trägergestell (5) schwenkbar ist;
- einem auf dem Trägergestell (5) angeordneten optischen Bildgebungs- und/oder Näherungssensor (8), insbesondere einer Kamera, einem Radarsensor oder einem Lidarsensor, wobei der optische Bildgebungs- und/oder Näherungssensor (8) gegenüber dem Trägergestell (5) schwenkbar ist; und
- ein Kommunikationsmodul (9), das zum Empfangen von Daten von der Empfängereinheit (7) und dem optischen Bildgebungs- und/oder Näherungssensor (8) und zum Übertragen der Daten ausgebildet ist.

## Beschreibung

Die Anmeldung betrifft einen mobilen Sicherheitsständer für mobile Sicherheits-Lichtschranken, ein mobiles Sicherheits-Lichtschranken-System, ein mobiles Bausystem und ein Verfahren zum Betrieb des mobilen Bausystems.

Sicherheits-Lichtschranken werden häufig in Produktionsstätten eingesetzt, um den Zugang zu zugangsbeschränkten Bereichen zu überwachen, in denen beispielsweise ein Sicherheitsrisiko für Arbeiter besteht. Solche Sicherheits-Lichtschranken bestehen in der Regel aus einer Lichtquelle und einem Detektor, der Licht von der Lichtquelle empfängt. Wenn eine Person oder ein Gegenstand den optischen Pfad zwischen der Lichtquelle und dem Detektor versperrt, nimmt die Lichtintensität am Detektor plötzlich ab, was eine Verletzung des zugangsbeschränkten Bereichs anzeigt. Ein dadurch ausgelöstes Signal kann dazu verwendet werden, einen Alarm auszulösen oder eine Maschine anzuhalten, die ein Sicherheitsrisiko für das Personal im zugangsbeschränkten Bereich darstellt. Solche Lichtschranken werden in der Regel in Innenräumen an festen Standorten installiert.

Ein System zur Vermeidung von Kollisionen zwischen einem Roboter und Hindernissen ist zum Beispiel aus der US 5 280 622 A bekannt.

Vor allem im Bauwesen werden Sicherheitszäune häufig eingesetzt, um den Zugang zu gefährlichen Bereichen zu begrenzen und Unfälle zu vermeiden. In der Regel werden Metallgitterzäune verwendet, um physische Barrieren zu schaffen. Ein Nachteil solcher Metallzäune ist, dass sie schwer und unflexibel sind und Beschädigungen nicht erkennen können. Alternativ können auch mobile Sicherheits-Lichtschranken verwendet werden. Diese mobilen Lichtschranken bestehen in der Regel aus Lichtquellen und Detektoren, die paarweise an Pfosten befestigt sind. Durch entsprechendes Aufstellen der Pfosten auf der Baustelle kann ein mobiler virtueller Zaun erzeugt werden.

Ein optoelektronischer virtueller Sicherheitszaun, der aus Pfosten mit Emittern und Empfängern besteht, ist zum Beispiel aus der US 5 198 799 A bekannt.

Der zunehmende Einsatz mobiler Bauroboter, die autonom Aufgaben wie beispielsweise Bohren oder das Setzen von Ankern übernehmen, führt zu neuen Sicherheitsanforderungen auf Baustellen. Mobile Bauroboter werden zunehmend eingesetzt, um sich wiederholende und körperlich anspruchsvolle Aufgaben auf Baustellen zu automatisieren. Ein mobiler Bauroboter kann zum Beispiel Löcher an vordefinierten Positionen bohren oder Anker montieren. Solche mobilen Bauroboter sind so konfiguriert, dass sie sich autonom auf der Baustelle bewegen, vordefinierte Positionen ansteuern, an denen eine bestimmte Aufgabe ausgeführt werden soll, und die entsprechende Aufgabe dann ausführen. Mit Hilfe eines solchen mobilen Roboters können die Arbeitskräfte effizienter eingesetzt und die Bauarbeiten beschleunigt werden. Typischerweise bestehen solche mobilen Roboter aus einer Basis, einem Antriebssystem zum Bewegen des Roboters sowie einem Endeffektor. Der Endeffektor kann an einem Roboterarm angebracht sein. Solche mobilen Bauroboter können ein erhebliches Sicherheitsrisiko für Bauarbeiter in der Nähe des Roboters darstellen.

WO 2022 154 731 A1 offenbart beispielsweise ein System zur Bearbeitung von Betonoberflächen, das eine mobile Anordnung zur Zugangskontrolle und eine Maschine zur autonomen oder ferngesteuerten Bearbeitung von Betonoberflächen umfasst. Die mobile Zugangskontrollanordnung umfasst eine Zugangskontrolleinheit, die mit einer oder mehreren Lichtschrankenvorrichtungen verbunden ist, die so angeordnet sind, dass sie einen zugangskontrollierten Bereich der Betonoberfläche abgrenzen.

Da Sicherheitsvorkehrungen manchmal eher als zusätzliche Arbeitsbelastung für die Arbeiter, denn als Vorteil empfunden werden, werden Sicherheitszäune in manchen Fällen in irrelevanten Bereichen aufgestellt, so dass vordefinierte Sicherheitsprotokolle umgangen werden. Beispielsweise kann ein Sicherheitszaun in Bereich A und der Roboter in Bereich B eingesetzt werden, so dass die Arbeiter ungehinderten Zugang zu Bereich B haben. Durch eine solche Anordnung werden die Sicherheitsprotokolle umgangen, wodurch die Sicherheit beeinträchtigt und für die Arbeiter gefährliche Bedingungen geschaffen werden.

Es ist daher Aufgabe der vorliegenden Erfindung, einen mobilen Sicherheitsständer für mobile Sicherheits-Lichtschranken, ein mobiles Bausystem und ein Verfahren zum Betrieb des mobilen Bausystems bereitzustellen, die die oben genannten Nachteile mildern oder beseitigen. Insbesondere ist es Gegenstand der vorliegenden Erfindung, einen mobilen Sicherheitsständer für mobile Sicherheits-Lichtschranken, ein mobiles Bausystem und ein Verfahren zum Betrieb des mobilen Bausystems bereitzustellen, welche eine Fehlanwendung verhindern und die Sicherheit, insbesondere auf Baustellen, erhöhen.

Diese Aufgabe wird gelöst durch einen mobilen Sicherheitsständer für eine mobile Sicherheits-Lichtschranke aufweisend:
- eine Basis mit mindestens einem Rad zum Bewegen des mobilen Sicherheitsständers auf einer Fläche;
- ein Trägergestell, das an der Basis befestigt ist;
- eine Emittereinheit, insbesondere mit einem Laserstrahler, die zum Aussenden von elektromagnetischer Strahlung ausgebildet ist, wobei die Emittereinheit an dem Trägergestell angeordnet ist, wobei die Emittereinheit gegenüber dem Trägergestell schwenkbar ist; und/oder
- eine Empfängereinheit, die zum Empfangen elektromagnetischer Strahlung konfiguriert ist, wobei die Empfängereinheit an dem Trägergestell angeordnet ist, wobei die Empfängereinheit in Bezug auf das Trägergestell schwenkbar ist;
- einen Bildgebungs- und/oder Näherungssensor, insbesondere eine Kamera, einen Radarsensor oder einen Lidarsensor, der an dem Trägergestell angeordnet ist, wobei der Bildgebungs- und/oder Näherungssensor in Bezug auf das Trägergestell schwenkbar ist; und
- ein Kommunikationsmodul, das zum Empfangen von Daten von der Empfängereinheit und dem Bildgebungs- und/oder Näherungssensor und zum Übertragen der Daten konfiguriert ist.

Die Aufgabe wird ferner gelöst durch ein mobiles Sicherheits-Lichtschranken-System, aufweisend:
- einen erfindungsgemäßen mobilen Sicherheitsständer mit einer Empfängereinheit; und
- mindestens einen weiteren mobilen Sicherheitsständer, aufweisend:
- eine weitere Basis mit mindestens einem weiteren Rad zum Bewegen des weiteren mobilen Sicherheitsständers;
- ein weiteres Trägergestell, das an der weiteren Basis befestigt ist;
- eine weitere Emittereinheit, die zum Aussenden elektromagnetischer Strahlung konfiguriert ist, wobei die weitere Emittereinheit an dem weiteren Trägergestell angeordnet ist, wobei die weitere Emittereinheit in Bezug auf das weitere Trägergestell schwenkbar ist;
wobei die weitere Emittereinheit und die Empfängereinheit so ausgerichtet sind, dass die Empfängereinheit so konfiguriert ist, dass sie elektromagnetische Strahlung von der weiteren Emittereinheit empfängt, wobei die weitere Emittereinheit und die Empfängereinheit eine Lichtschranke bilden.

Des Weiteren wird diese Aufgabe durch ein mobiles Bausystem mit einem mobilen Bauroboter gelöst, aufweisend:
- eine Roboterbasis mit einem Antriebssystem zum Bewegen des mobilen Bauroboters auf einer Fläche; und
- eine Datenempfangseinheit; und
- ein erfindungsgemäßes mobiles Sicherheits-Lichtschranken-System,
wobei das Kommunikationsmodul zum Übertragen der Daten an die Datenempfangseinheit ausgebildet ist, wobei der Bildgebungs- und/oder Näherungssensor zur Überwachung des mobilen Bauroboters ausgebildet ist.

Darüber hinaus wird der Gegenstand durch ein Verfahren zum Betrieb des mobilen Bausystems gelöst, mit den Schritten:
- Bereitstellen des mobilen Bauroboters in einem Baubereich auf einer Baustelle;
- Anordnen des mobilen Sicherheits-Lichtschranken-Systems an der Baustelle, wobei das mobile Sicherheits-Lichtschranken-System den Baubereich von einem Sicherheitsbereich trennt;
- Überwachen des Bauroboters mit Hilfe des Bildgebungs- und/oder Näherungssensors;
- Erzeugen eines Durchbruchssignals durch die mobilen Sicherheits-Lichtschranken, wobei das Durchbruchssignal durch eine Unterbrechung der empfangenen elektromagnetischen Strahlung an der Empfängereinheit ausgelöst wird, wobei die Daten das Durchbruchssignal aufweisen;
- Übertragen der Daten an die Datenempfangseinheit des mobilen Bauroboters; und vorzugsweise
- Unterbindung einer Gefahr durch den bzw. Bewegungen des mobilen Bauroboters.

Der mobile Sicherheitsständer für die mobile Sicherheits-Lichtschranke weist eine Basis mit mindestens einem Rad zum Bewegen des mobilen Sicherheitsständers auf einer Fläche auf. Die Fläche kann insbesondere die Bodenoberfläche einer Baustelle sein, z. B. die Bodenoberfläche eines Tunnels oder eines Gebäudes. Die Basis kann z. B. ein Fahrgestell für das mindestens eine Rad umfassen. Die Basis kann ein Rechteck oder einen Querschnitt aufweisen.

Ein Trägergestell ist an der Basis befestigt. Das Trägergestell kann ein strukturelles Gerüst aufweisen, z. B. aus einer oder mehreren Stützstangen. Die Stützstangen bestehen vorzugsweise aus einem leichten und steifen Material, vorzugsweise bestehen die Stützstangen aus Aluminium. Das Trägergestell kann insbesondere mindestens ein längliches Element umfassen, das bei bestimmungsgemäßem Gebrauch im Wesentlichen vertikal angeordnet sein kann.

Auf dem Trägergestell ist eine Emittereinheit angeordnet. Die Emittereinheit kann z. B. aus einem Laserstrahler oder einer LED bestehen. Insbesondere weist die Emittereinheit mindestens zwei, vorzugsweise sechs, Emitter auf. Die Emitter sind insbesondere an einem länglichen Element an der Emittereinheit angeordnet. Die Emittereinheit ist insbesondere so konfiguriert, dass sie elektromagnetische Strahlung aussendet, z. B. mit einer Wellenlänge im sichtbaren Spektrum (VIS) oder im Infrarotbereich (IR). Vorzugsweise ist die Emittereinheit an dem Trägergestell befestigt. Insbesondere ist die emittierte elektromagnetische Strahlung im Wesentlichen kollimiert. Vorzugsweise ist die Emittereinheit von dem Trägergestell abnehmbar. Die Emittereinheit ist in Bezug auf das Trägergestell schwenkbar.

Zusätzlich oder alternativ zur Emittereinheit kann an dem Trägergestell eine Empfängereinheit zum Empfang elektromagnetischer Strahlung angeordnet sein. Die Empfängereinheit kann insbesondere z. B. einen Fotodetektor aufweisen. Die Empfängereinheit kann insbesondere mindestens zwei Empfänger, insbesondere Fotodetektoren, aufweisen. Die Empfängereinheit kann insbesondere mindestens zwei, vorzugsweise sechs, Empfänger aufweisen. Die Empfänger können an einem langgestreckten Teil der Empfängereinheit angeordnet sein. Die Empfängereinheit kann an dem Trägergestell befestigt sein. Die Empfängereinheit kann vorzugsweise von dem Trägergestell abnehmbar sein. Die Empfängereinheit ist in Bezug auf das Trägergestell schwenkbar ausgebildet.

Vorzugsweise besteht der mobile Sicherheitsständer aus mindestens zwei Emittereinheiten, wobei die mindestens zwei Emittereinheiten separat und unabhängig voneinander schwenkbar sind.

Vorzugsweise besteht der mobile Sicherheitsständer aus mindestens zwei Empfängereinheiten, wobei die mindestens zwei Empfängereinheiten separat und unabhängig voneinander schwenkbar sind.

Eine mobile Sicherheits-Lichtschranke kann insbesondere aus mindestens zwei mobilen Sicherheitsständern gebildet werden, wobei eine Emittereinheit eines ersten mobilen Sicherheitsständers mit einer Empfängereinheit eines weiteren mobilen Sicherheitsständers zusammenwirkt. Die Empfängereinheit ist so konfiguriert, dass sie elektromagnetische Strahlung von der zugehörigen Emittereinheit empfängt. Ein von der Empfängereinheit detektiertes Signal (vorzugsweise in Abhängigkeit von der Zeit) zeigt eine Behinderung eines optischen Weges zwischen der Emittereinheit und der Empfängereinheit an. Um die zusammenwirkende(n) Emittereinheit(en) und Empfängereinheit(en) aufeinander ausrichten zu können, sind sowohl die Emittereinheit als auch die Empfängereinheit in Bezug auf das Trägergestell schwenkbar. Beispielsweise können die Emittereinheit und/oder die Empfängereinheit in horizontaler Richtung und/oder in vertikaler Richtung schwenkbar sein. "Horizontal" und "vertikal" beziehen sich auf eine Verwendungsrichtung des mobilen Sicherheitsständers. Die Schwenkbarkeit der Empfängereinheit und der Emittereinheit ist entscheidend für den Einsatz und die Ausrichtung einer mobilen Sicherheits-Lichtschranke und deren Anpassung an verschiedene Situationen.

Darüber hinaus weist der mobile Sicherheitsständer einen Bildgebungs- und/oder einen Näherungssensor auf. Der Bildgebungs- und/oder Näherungssensor ist auf dem Trägergestell angeordnet und gegenüber dem Trägergestell schwenkbar. Dieser Bildgebungs- und/oder Näherungssensor ermöglicht eine zusätzliche Überwachung des zugangsbeschränkten Bereichs, den die mobilen Sicherheits-Lichtschranken abgrenzen sollen. Die Lichtschranken liefern ein Signal, das einen Durchbruch des zugangsbeschränkten Bereichs anzeigt. Der zugangsbeschränkte Bereich (d.h. der Bereich innerhalb der durch einen oder mehrere Lichtvorhänge und weitere optionale Barrieren definierten Grenzen) wird jedoch nicht durch die Lichtschranken überwacht, sondern nur die Grenzen des zugangsbeschränkten Bereichs. Mit Hilfe des Bildgebungs- und/oder Näherungssensors kann der Bereich selbst zusätzlich zu seinem Umfang überwacht werden. Der Bildgebungs- und/oder Näherungssensor kann eine Kamera, ein Radarsensor oder ein Lidarsensor sein. Die Kamera kann z. B. eine Stereokamera sein. Beim Einsatz des mobilen Sicherheitsständers wird die Emittereinheit und/oder die Empfängereinheit z. B. auf weitere mobile Sicherheitsständer ausgerichtet. Der Bildgebungs- und/oder Näherungssensor wird dann so ausgerichtet, dass der zugangsbeschränkte Bereich überwacht wird. Der Bildgebungs- und/oder der Näherungssensor können die Umgehung von Sicherheitsprotokollen verhindern, da die Überwachung durch den Bildgebungs- und/oder den Näherungssensor ein zusätzliches Sicherheitsmerkmal neben einer Lichtschranke darstellt.

Darüber hinaus weist der mobile Sicherheitsständer ein Kommunikationsmodul auf, das so konfiguriert ist, dass es Daten von der Empfängereinheit und dem Bildgebungs- und/oder dem Näherungssensor sowie optional von der Emittereinheit empfängt und die Daten überträgt. Die Daten können insbesondere einen Hinweis auf eine Durchbrechung der Lichtschranke aufweisen, beispielsweise einen plötzlichen Abfall eines Signals der Empfängereinheit. Die Daten können insbesondere z. B. ein Statussignal des Emitters enthalten. Die Daten können z. B. an eine externe Verarbeitungseinheit, z. B. einen Personalcomputer eines Baustellenleiters, übertragen werden. Die Daten können (aus der Ferne) von einem Menschen und/oder mit Hilfe einer automatisierten Software, z. B. durch Bilderkennung, überwacht und analysiert werden. Das Kommunikationsmodul kann insbesondere ein Bluetooth-Modul, ein GSM-Modul oder ein WiFi-Modul aufweisen.

Vorzugsweise kann der mobile Sicherheitsständer ein Steuermodul zur Steuerung des mobilen Sicherheitsständers aufweisen, insbesondere die Emittereinheit und/oder die Empfängereinheit und/oder das Kommunikationsmodul. Das Steuermodul kann insbesondere eine Not-Aus-Taste aufweisen, die so konfiguriert ist, dass sie manuell einen Alarm auslöst, z. B. im Falle eines Sicherheitsrisikos.

Das Steuermodul kann eine Deaktivierungssteuerung aufweisen, insbesondere einen Deaktivierungsknopf, z. B. einen Kippschalter, zur Deaktivierung der Empfängereinheit. Das Steuermodul kann einen Deaktivierungsknopf, insbesondere einen Kippschalter, zur Deaktivierung der Emittereinheit aufweisen.

Das Steuermodul kann eine Kopplungssteuerung, insbesondere einen Kopplungsknopf, aufweisen, um die Empfängereinheit mit einer Emittereinheit eines anderen mobilen Sicherheitsständers zu verbinden. Die Kopplungssteuerung kann so konfiguriert sein, dass sie die Emittereinheit und/oder die Empfängereinheit ausschaltet und dann die Emittereinheit und/oder die Empfängereinheit wieder reaktiviert. Der Zeitpunkt der Reaktivierung kann insbesondere genutzt werden, um automatisch festzustellen, welche mobilen Sicherheitsständer mittels einer Emittereinheit und einer Empfängereinheit, die zusammen eine Lichtschranke bilden, miteinander verbunden sind.

Das Steuermodul kann eine Aktivierungssteuerung aufweisen, insbesondere eine Aktivierungssteuerung zur Aktivierung einer Überwachung eines zugangsbeschränkten Bereichs durch eine Sicherheits-Lichtschranke, zu welcher der mobile Sicherheitsständer gehören kann. Die Aktivierungssteuerung kann von einem Bediener betätigt werden, nachdem dieser sich vergewissert hat, dass der zugangsbeschränkte Bereich sicher ist und sich beispielsweise keine Personen in dem von der Sicherheits-Lichtschranke überwachten zugangsbeschränkten Bereich befinden.

Optional ist die Empfängereinheit und/oder die Emittereinheit in Bezug auf das Trägergestell beweglich. Vorzugsweise sind die Empfängereinheit und die Emittereinheit getrennt voneinander beweglich, so dass beide unabhängig voneinander ausgerichtet werden können. Insbesondere auf Baustellen können beim Einsatz einer mobilen Sicherheits-Lichtschranke Unebenheiten, Höhenunterschiede und verschiedene Hindernisse auftreten, die berücksichtigt und ausgeglichen werden müssen. Daher ist ein hohes Maß an Flexibilität des mobilen Sicherheitsständers von entscheidender Bedeutung.

Das Trägergestell kann beispielsweise eine Profilschiene, insbesondere eine Aluminiumprofilschiene, aufweisen. Die Empfängereinheit und/oder die Emittereinheit können insbesondere auf einem Träger angeordnet sein, wobei der Träger mit der Profilschiene in Eingriff steht, so dass die Empfängereinheit und/oder die Emittereinheit in Bezug auf die Profilschiene verschiebbar ist. Die Empfängereinheit und/oder die Emittereinheit können insbesondere entlang mindestens einer ersten Achse in mindestens vertikaler Richtung beweglich sein (bei bestimmungsgemäßer Verwendung des mobilen Sicherheitsständers). Optional kann die Empfängereinheit und/oder die Emittereinheit entlang einer zweiten Achse beweglich sein, wobei die zweite Achse quer, insbesondere orthogonal, zu der ersten Achse verläuft. Die zweite Achse kann im Wesentlichen horizontal sein. Optional kann die Empfängereinheit und/oder die Emittereinheit entlang einer dritten Achse beweglich sein, wobei die dritte Achse quer, insbesondere orthogonal, zu der ersten und der zweiten Achse verläuft. Insbesondere kann die dritte Achse im Wesentlichen horizontal sein.

Vorzugsweise kann die Empfängereinheit und/oder die Emittereinheit an einer Kugelkopfhalterung befestigt werden. Kugelkopfhalterungen bieten zwei Freiheitsgrade bei der Drehung und ermöglichen eine schnelle, einfache und zuverlässige Einstellung und Ausrichtung. Der Kugelkopf kann auf dem Träger angeordnet sein. Insgesamt kann die Empfängereinheit und/oder die Emittereinheit mindestens einen, optional zwei und vorzugsweise drei, translatorische Freiheitsgrade in Bezug auf das Trägergestell sowie mindestens einen, vorzugsweise zwei, rotatorische Freiheitsgrade aufweisen. Diese Freiheitsgrade, vorzugsweise jeder Empfängereinheit und jeder Emittereinheit, erleichtern den Einsatz und die Ausrichtung des mobilen Sicherheitsständers in verschiedenen Situationen.

Das Trägergestell kann insbesondere ein an das mindestens eine Rad angrenzendes unteres Ende und ein dem unteren Ende gegenüberliegendes oberes Ende aufweisen, wobei der Bildgebungs- und/oder der Näherungssensor am oberen Ende angeordnet sein kann. Diese Anordnung ist besonders vorteilhaft, da auf diese Weise das Sichtfeld des Bildgebungs- und/oder Näherungssensors vergrößert werden kann.

Vorzugsweise kann der mobile Sicherheitsständer drei Stützelemente zur Abstützung des mobilen Sicherheitsständers auf dem Untergrund aufweisen, wobei die Stützelemente ausziehbar sind. Die Stützelemente können insbesondere an der Basis befestigt sein. Die Stützelemente können in einer eingefahrenen Position einfahrbar sein, wobei das mindestens eine Rad in der eingefahrenen Position der Stützelemente mit der Oberfläche in Kontakt sein kann. Die Stützelemente können insbesondere in eine ausgefahrene Position ausgefahren werden, wobei das mindestens eine Rad in der ausgefahrenen Position der Stützelemente nicht in Kontakt mit der Oberfläche sein darf. Die Verlängerung der Stützelemente kann individuell eingestellt werden, um den mobilen Sicherheitsständer auszurichten.

Das Trägergestell kann mindestens einen, vorzugsweise zwei Griffe zum Halten oder Aufnehmen des mobilen Sicherheitsständers aufweisen.

Vorzugsweise kann der mobile Sicherheitsständer eine Ausrichtungsunterstützung, insbesondere eine Wasserwaage, aufweisen. Die Ausrichtungsunterstützung kann eine Neigung des Trägergestells in Bezug auf eine Vertikale anzeigen. Zusätzlich kann am Trägergestell, insbesondere an der Emittereinheit, eine Ausrichtungshilfe angeordnet sein. Bei der Ausrichtungshilfe kann es sich insbesondere um einen Führungslaser mit einer Wellenlänge im sichtbaren Bereich handeln, der zur Ausrichtung der Emittereinheit in Bezug auf eine Empfängereinheit verwendet werden kann. Die Ausrichtungshilfe kann insbesondere aus einem Fadenkreuz bestehen. Die Ausrichtungshilfe kann insbesondere abnehmbar an dem Trägergestell und/oder der Empfängereinheit und/oder der Emittereinheit befestigt werden. Die Ausrichtungshilfe kann z.B. mittels einer lösbaren Klickverbindung befestigt werden.

Vorzugsweise kann der mobile Sicherheitsständer eine Batterie aufweisen, die für die Bereitstellung von elektrischer Energie konfiguriert ist. Insbesondere kann die Batterie für die Stromversorgung der Emittereinheit, der Empfängereinheit, des Bildgebungs- und/oder des Näherungssensors und/oder des Steuer- und Kommunikationsmoduls konfiguriert sein. Die Batterie kann insbesondere auf oder in dem Trägergestell angeordnet sein. Vorzugsweise kann die Batterie an oder in der Basis angeordnet sein, um ein Gegengewicht bereitzustellen und den mobilen Sicherheitsständer zu stabilisieren.

Optional kann der mobile Sicherheitsständer eine zweite Batterie aufweisen, die für die Bereitstellung von elektrischer Energie konfiguriert ist. Die beiden Batterien können insbesondere abnehmbar am Trägergestell oder an der Basis befestigt sein, so dass jede Batterie unabhängig von der anderen Batterie abgenommen werden kann. Ist beispielsweise die Batterie leer, kann sie entfernt und durch eine (andere) geladene Batterie ersetzt werden. Während des Austauschs kann die zweite Batterie Strom liefern, so dass der Austausch nicht zu einer Unterbrechung der mobilen Sicherheits-Lichtschranke führt.

Optional kann der mobile Sicherheitsständer ein Solarpanel zur Stromversorgung, insbesondere zum Aufladen der Batterie, aufweisen.

Vorzugsweise kann der mobile Sicherheitsständer eine optische Markierung, insbesondere ein Prisma, zur Verfolgung mit einem Tachymeter aufweisen, wobei die optische Markierung auf dem Trägergestell angeordnet ist. Insbesondere auf Baustellen ist die exakte Position von Elementen entscheidend für die Einhaltung von Bauvorschriften und aus Sicherheitsgründen. Mittels der optischen Markierung kann der mobile Sicherheitsständer mit dem Tachymeter verfolgt werden.

Optional kann der mobile Sicherheitsständer ein Tachymeter zur Verfolgung einer optischen Markierung aufweisen, wobei das Tachymeter auf dem Trägergestell angeordnet ist. Bei dem Tachymeter kann es sich insbesondere um eine Laser-Totalstation handeln. Das Tachymeter kann so konfiguriert sein, dass es Elemente auf der Baustelle verfolgt, z. B. mobile Maschinen, wie einen mobilen (Bau-)Roboter. Das Tachymeter kann insbesondere der Bildgebungs- und/oder der Näherungssensor sein.

Vorzugsweise kann der mobile Sicherheitsständer mindestens eine optische Anzeigeeinheit aufweisen, die zur Anzeige eines Betriebszustands konfiguriert ist. Der mobile Sicherheitsständer kann insbesondere eine optische Anzeigeeinheit zur Anzeige eines Betriebszustandes der Empfängereinheit aufweisen. Zusätzlich oder alternativ kann der mobile Sicherheitsständer eine optische Anzeigeeinheit zur Anzeige eines Betriebszustands der Emittereinheit aufweisen. Vorzugsweise weist der mobile Sicherheitsständer eine optische Anzeigeeinheit pro Emittereinheit und eine optische Anzeigeeinheit pro Empfängereinheit auf. Die optische Anzeigeeinheit kann insbesondere Statussignale (ähnlich einer Ampel) aufweisen, die anzeigen, ob der zugangsbeschränkte Bereich sicher betreten werden kann oder nicht. Die optische Anzeigeeinheit kann insbesondere so konfiguriert sein, dass sie anzeigt, ob die Emittereinheit aktiv ist oder nicht. So kann beispielsweise eine rot blinkende LED auf ein Sicherheitsrisiko hinweisen. Die optische Anzeigeeinheit kann von außen gesteuert werden.

Die optische Anzeigeeinheit (der Empfängereinheit) kann insbesondere so konfiguriert sein, dass sie anzeigt, ob die Empfängereinheit aktiv ist oder nicht. Die optische Anzeigeeinheit kann so konfiguriert sein, dass sie anzeigt, ob die Empfängereinheit ein Signal von einer Emittereinheit empfängt oder nicht. Eine rot blinkende LED kann zum Beispiel ein Sicherheitsrisiko anzeigen. Die optische Anzeigeeinheit kann von außen gesteuert werden.

Der mobile Sicherheitsständer kann insbesondere eine optische Anzeigeeinheit aufweisen, die so konfiguriert ist, dass sie einen Betriebszustand des gesamten mobilen Sicherheitsständers anzeigt. Die optische Anzeigeeinheit kann beispielsweise Statussignale (ähnlich einer Ampel) enthalten, die anzeigen, ob es sicher ist, den zugangsbeschränkten Bereich zu betreten oder nicht. So kann beispielsweise eine rot blinkende LED ein Sicherheitsrisiko anzeigen. Die optische Anzeigeeinheit kann von außen gesteuert werden.

Vorzugsweise kann der mobile Sicherheitsständer ein Audiosignalsystem aufweisen, das so konfiguriert ist, dass es ein Audiosignal abgibt. Das Audiosignalsystem kann insbesondere so konfiguriert sein, dass es einen Alarm ausgibt, wenn z. B. die Lichtschranke durchbrochen wird. Die Tonsignalanlage kann so konfiguriert sein, dass sie während des (regulären) Betriebs einen Warnton bei Gefahr abgibt.

Vorzugsweise weist der mobile Sicherheitsständer mindestens einen Warnhinweis, insbesondere ein Warnschild auf, wobei der mindestens eine Warnhinweis lösbar an dem Trägergestell befestigt ist. Bei solchen Warnhinweisen kann es sich vorzugsweise um passive, d. h. stromlose Elemente handeln, die ausfallsicher auf eine mögliche Gefahr hinweisen. Je nach Situation kann eine Anpassung des Warnhinweises erforderlich sein. Daher kann es erforderlich sein, Warnhinweise regelmäßig auszutauschen. Das Trägergestell kann insbesondere Halterungen zur Befestigung von Warnhinweisen aufweisen. Das Trägergestell kann insbesondere eine Aufnahme für einen Warnhinweis aufweisen. Das Trägergestell kann insbesondere einen Klickverschluss oder Magnete zum Anbringen des mindestens einen Warnhinweises aufweisen. Der Warnhinweis kann insbesondere in Bezug auf das Trägergestell schwenkbar sein, um eine Ausrichtung des Warnhinweises einzustellen, z. B., um die Sichtbarkeit des Warnhinweises auf einer Baustelle zu verbessern.

Die Erfindung umfasst zudem ein mobiles Sicherheits-Lichtschranken-System, bestehend aus (mindestens einem) erfindungsgemäßen mobilen Sicherheitsständer mit einer weiteren Empfängereinheit und einem weiteren mobilen Sicherheitsständer, bestehend aus:
- einer weiteren Basis mit mindestens einem weiteren Rad zum Bewegen des weiteren mobilen Sicherheitsständers;
- ein weiteres Trägergestell, das an der weiteren Basis befestigt ist;
- eine weitere Emittereinheit, die zum Aussenden elektromagnetischer Strahlung konfiguriert ist, wobei die weitere Emittereinheit an dem weiteren Trägergestell angeordnet ist, wobei die weitere Emittereinheit in Bezug auf das weitere Trägergestell schwenkbar ist;
wobei die weitere Emittereinheit und die Empfängereinheit so ausgerichtet sind, dass die Empfängereinheit so konfiguriert ist, dass sie elektromagnetische Strahlung von der weiteren Emittereinheit empfängt, wobei die weitere Emittereinheit und die Empfängereinheit eine Lichtschranke bilden.

Der weitere mobile Sicherheitsständer kann insbesondere ein erfindungsgemäßer mobiler Sicherheitsständer sein (d.h. mit einem Bildgebungs- und/oder Näherungssensor und einem Steuer- und Kommunikationsmodul). Je nach Anwendungsfall kann jedoch auch ein einziger Bildgebungs- und/oder Näherungssensor ausreichen, z.B. kann der mobile Sicherheitsständer als "Leader", als steuernder Sicherheitsständer, und der weitere mobile Sicherheitsständer als "Follower", als dem Leader folgender Sicherheitsständer, angesehen werden.

Um eine Lichtschranke zu bilden, reichen mindestens zwei Sicherheitsständer aus. Je nach Anwendung können drei oder mehr Sicherheitsständer (d. h. mindestens ein erfindungsgemäßer mobiler Sicherheitsständer und optional weitere mobile Sicherheitsständer) eingesetzt werden, die nach dem Prinzip des mobilen Lichtschranken-Systems miteinander interagieren, um einen zugangsbeschränkten Bereich abzugrenzen.

Ein mobiles Bausystem weist einen mobilen Bauroboter und ein mobiles Sicherheits-Lichtschranken-System gemäß der Erfindung auf. Der mobile Bauroboter weist eine Roboterbasis mit einem Antriebssystem zum Bewegen des mobilen Bauroboters auf einer Fläche und eine Empfängereinheit für die Daten auf. Das Steuer- und Kommunikationsmodul (des mobilen Sicherheitsständers) ist zur Übertragung der Daten an die Datenempfangseinheit (des mobilen Bauroboters) ausgebildet, wobei der Bildgebungs- und/oder Näherungssensor zur Überwachung des mobilen Bauroboters ausgebildet ist. Der mobile Bauroboter ist im bestimmungsgemäßen Gebrauch in einem zugangsbeschränkten Bereich angeordnet. Der Bildgebungs- und/oder Näherungssensor kann insbesondere zur Überwachung des zugangsbeschränkten Bereichs ausgebildet sein.

Vorzugsweise weist der mobile Sicherheitsständer ein Tachymeter auf, wobei der mobile Bauroboter einen optischen Robotermarker aufweist, wobei der weitere mobile Sicherheitsständer einen weiteren optischen Marker aufweist, wobei das Tachymeter zur Verfolgung des weiteren optischen Markers und des optischen Robotermarkers und zur Bestimmung einer Position des optischen Robotermarkers relativ zum mobilen Sicherheits-Lichtschranken-System eingerichtet ist.

Die genaue Bestimmung des Standorts des mobilen Bauroboters auf der Baustelle ist aus mehreren Gründen relevant. Präzision ist bei Bauprojekten entscheidend. Es muss sichergestellt werden, dass sich z. B. Bohrungen genau an der vorgesehenen Stelle befinden, um Fehler und kostspielige Verzögerungen zu vermeiden. Darüber hinaus kann die exakte Positionierung der Bohrungen zu einer erhöhten Sicherheit auf der Baustelle beitragen. Die genaue Positionierung von Ankern kann dazu beitragen, Kollisionen mit anderen Ausrüstungen oder Bauteilen zu vermeiden und auch Verletzungen der Arbeiter zu verhindern. Schließlich ist die Kenntnis der genauen Position der Bohrungen auch für Dokumentationszwecke erforderlich, da sie eine klare Aufzeichnung der durchgeführten Arbeiten und des Projektfortschritts ermöglichen. Daher sind in diesem Zusammenhang sowohl Effizienz als auch Präzision entscheidend. Die Verfolgung kann mit einem Tachymeter erfolgen. Die Aufnahme des Tachymeters in den mobilen Sicherheitsständer ist besonders vorteilhaft, da nur ein einziger Pfosten benötigt wird, um sowohl ein Tachymeter als auch einen der Pfosten einer Lichtschranke einzusetzen. Außerdem ist der mobile Sicherheitsständer für die Überwachung des mobilen Bauroboters ausgelegt und sollte daher an einer Position mit einem ausreichenden Sichtfeld platziert werden. Auch das Tachymeter sollte so platziert werden, dass eine ungehinderte Sichtlinie zum mobilen Bauroboter besteht, vorzugsweise im gesamten Baustellenbereich.

Das Tachymeter kann insbesondere so konfiguriert sein, dass es die optische Markierung automatisch verfolgt. Die Verfolgung umfasst insbesondere die Messung eines Abstands zwischen dem Tachymeter und der optischen Markierung sowie die Messung eines Polarwinkels und eines Azimutwinkels einer Sichtlinie zwischen dem Tachymeter und der optischen Markierung in Bezug auf ein Referenzkoordinatensystem. Die optische Markierung kann entweder in einer stationären Position oder alternativ in Bewegung verfolgt werden. Das Tachymeter kann insbesondere eine Quelle für elektromagnetische Strahlung, insbesondere für sichtbares Licht, enthalten. Das Tachymeter kann zum Beispiel eine LED oder einen Laser aufweisen. Die optische Markierung kann z. B. ein Reflektor oder ein Prisma sein. Bei der optischen Markierung kann es sich insbesondere um ein rein passives Element handeln. Die optische Markierung kann zumindest einen Teil der vom Tachymeter ausgesandten und auf die optische Markierung einfallenden elektromagnetischen Strahlung zum Tachymeter reflektieren. Die Position des Tachymeters kann insbesondere verwendet werden, um ein globales Referenzkoordinatensystem innerhalb der Baustelle zu definieren. Die Position des Tachymeters in Bezug auf das Gelände, z. B. die Baustelle, kann bekannt sein. Die Position des Tachymeters kann z. B. während oder nach dem Aufstellen des Tachymeters (d. h. des mobilen Sicherheitsständers mit dem Tachymeter) festgelegt und gemessen werden.

Vorzugsweise kann der mobile Sicherheitsständer einen Prozessor aufweisen, der so konfiguriert ist, dass er eine Position des mobilen Bauroboters auf der Grundlage der Messung des Tachymeters, d. h. der Verfolgung der optischen Markierung(en) des mobilen Bauroboters, bestimmt. Der Prozessor kann sich insbesondere innerhalb des Tachymeters befinden. Das Tachymeter kann insbesondere Rotationssensoren aufweisen. Der Prozessor kann insbesondere Zugang zu einem computerlesbaren Medium haben, z. B. einem elektronischen Speicher. Auf dem computerlesbaren Medium kann eine elektronische Kopie eines Plans des Standorts gespeichert sein, wobei der Plan die Positionen angeben kann, an denen der mobile Roboter eine Aufgabe ausführen sollte. Der Prozessor kann insbesondere so konfiguriert sein, dass er die Bewegung des mobilen Roboters entsprechend steuert.

Das Tachymeter kann insbesondere so konfiguriert sein, dass es Ortungsdaten liefert. Die Daten können insbesondere das Verfolgungsdatum aufweisen. Der mobile Bauroboter kann relativ zu einem Baukoordinatensystem geortet werden. Anhand der Verfolgungsdaten kann eine Position des mobilen Bauroboters relativ zum mobilen Sicherheits-Lichtschranken-System berechnet werden. Anhand der Verfolgungsdaten kann beispielsweise überprüft werden, ob sich der mobile Bauroboter wie vorgesehen im zugangsbeschränkten Bereich befindet oder nicht.

Darüber hinaus kann der mobile Sicherheitsständer insbesondere so konfiguriert sein, dass er z. B. mittels drahtloser Ortung, Ultrabreitband-Ortung (UWB) oder optischer Ortung geortet werden kann. Der mobile Sicherheitsständer kann z. B. einen Wi-Fi-Tag und/oder einen UWB-Tag aufweisen. Der mobile Sicherheitsständer kann insbesondere eine optische Markierung aufweisen, die für die Verfolgung mit einem Tachymeter konfiguriert ist.

Ein Verfahren zum Betrieb des erfindungsgemäßen mobilen Bausystems weist die folgenden Schritte auf:
- Bereitstellen des mobilen Bauroboters in einem Baubereich auf einer Baustelle;
- Anordnen des mobilen Sicherheits-Lichtschranken-Systems an der Baustelle, wobei das mobile Sicherheits-Lichtschranken-System den Baubereich von einem Sicherheitsbereich trennt;
- Überwachen des Bauroboters mit Hilfe des Bildgebungs- und/oder Näherungssensors;
- Erzeugen eines Durchbruchssignals durch die mobile Sicherheits-Lichtschranke, wobei das Durchbruchssignal durch eine Unterbrechung der empfangenen elektromagnetischen Strahlung an der Empfängereinheit ausgelöst wird, wobei die Daten das Durchbruchssignal aufweisen;
- Übertragen der Daten an die Datenempfangseinheit des mobilen Bauroboters.

Der Baubereich kann insbesondere der zugangsbeschränkte Bereich sein.

Optional kann der mobile Bauroboter eine Steuereinheit zur Steuerung des mobilen Bauroboters aufweisen, wobei das Verfahren die folgenden weiteren Schritte aufweist:
- Empfangen des Durchbruchsignals durch die Steuereinheit;
- Einschränken und/oder Anhalten eines Betriebs und/oder einer Bewegung des mobilen Bauroboters als Reaktion auf den Empfang des Durchbruchsignals.

Der mobile Bauroboter kann zum Beispiel so konfiguriert sein, dass er Ziegelsteine verlegt, Wände oder Decken streicht, Löcher bohrt und/oder Befestigungselemente wie beispielsweise Anker oder Dübel anbringt. Die Steuereinheit kann insbesondere so konfiguriert sein, dass sie den mobilen Bauroboter anhält, wenn sie ein Durchbruchsignal erhält. Alternativ kann die Steuereinheit so konfiguriert sein, dass der Betrieb des mobilen Bauroboters eingeschränkt wird. Zum Beispiel kann der mobile Bauroboter einen aktuellen Schritt, wie das Bohren eines Lochs, sofort beenden und nach Beendigung dieses Schritts anhalten.

Zur Veranschaulichung wird die Offenbarung anhand einiger ausgewählter Ausführungsformen, die in den Zeichnungen dargestellt sind, näher erläutert. Diese Ausführungsformen sind jedoch nicht als einschränkend für die Offenbarung zu betrachten.
- Fig. 1: zeigt schematisch eine perspektivische Ansicht eines mobilen Sicherheitsständers;
- Fig. 2: zeigt schematisch eine weitere perspektivische Ansicht des mobilen Sicherheitsständers von Fig. 1;
- Fig. 3: zeigt schematisch die Draufsicht auf ein mobiles Bausystem mit einem mobilen Bauroboter, einer Datenempfangseinheit und einem mobilen Sicherheits-Lichtschranken-System; und
- Fig. 4: zeigt schematisch eine perspektivische Ansicht des mobilen Bausystems aus Fig. 3.

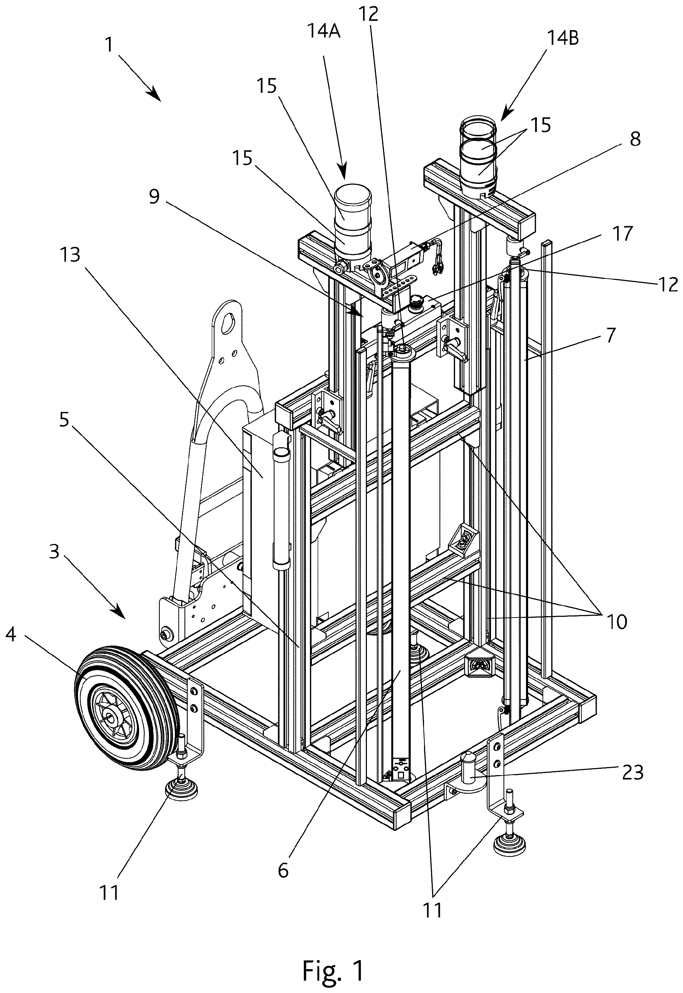

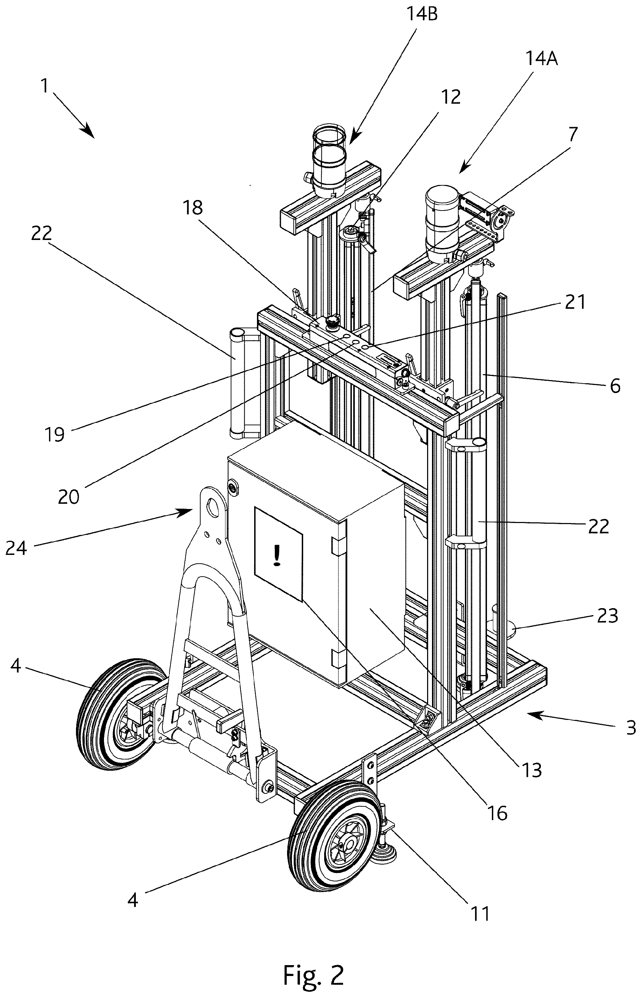

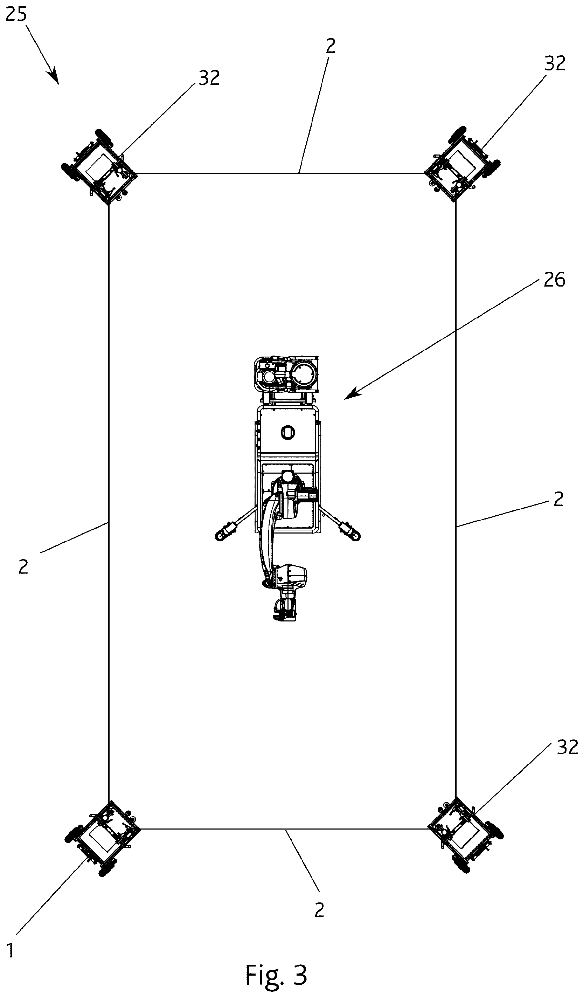

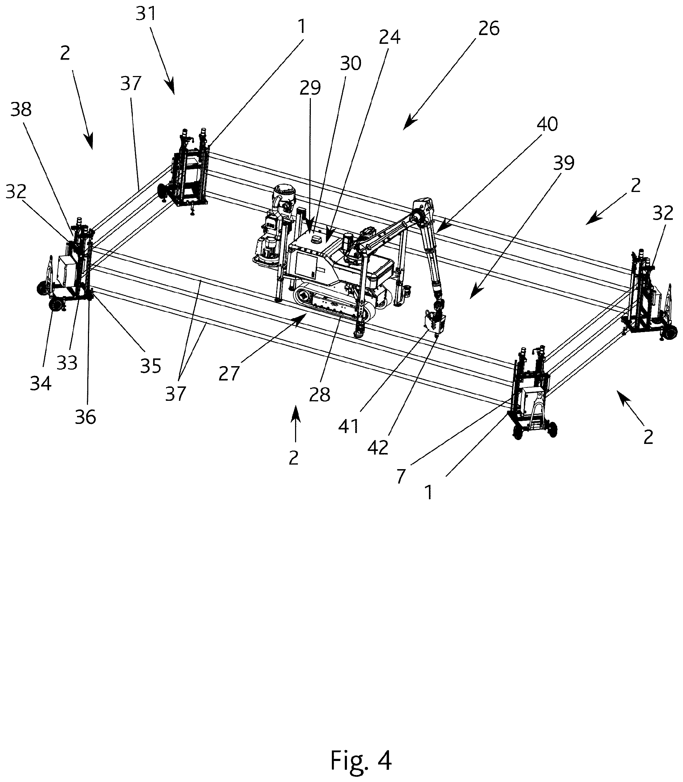

Figur 1 und Figur 2 zeigen perspektivische Ansichten eines mobilen Sicherheitsständers 1 für eine mobile Sicherheits-Lichtschranke 2 (siehe Figuren 3 und 4), bestehend aus:
- einer Basis 3 mit mindestens einem Rad 4 zum Bewegen des mobilen Sicherheitsständers 1 auf einer Fläche;
- einem Trägergestell 5, das an der Basis 3 befestigt ist;
- einer Emittereinheit 6, die zum Aussenden elektromagnetischer Strahlung konfiguriert ist, wobei die Emittereinheit 6 an dem Trägergestell 5 angeordnet ist, wobei die Emittereinheit 6 in Bezug auf das Trägergestell 5 schwenkbar ist; und
- einer Empfängereinheit 7, die zum Empfangen elektromagnetischer Strahlung konfiguriert ist, wobei die Empfängereinheit 7 auf dem Trägergestell 5 angeordnet ist, wobei die Empfängereinheit 7 in Bezug auf das Trägergestell 5 schwenkbar ist;
- einem optischen Bildgebungs- und/oder Näherungssensor 8, in diesem Beispiel eine Kamera, die auf dem Trägergestell 5 angeordnet ist, wobei der optische Bildgebungs- und/oder Näherungssensor 8 in Bezug auf das Trägergestell 5 schwenkbar ist; und
- einem Kommunikationsmodul 9, das zum Empfangen von Daten von der Empfängereinheit 7 und dem optischen Bildgebungs- und/oder Näherungssensor 8 und zum Senden der Daten konfiguriert ist.

Das Kommunikationsmodul 9 ist darüber hinaus für den Empfang von Daten von der Emittereinheit 6 konfiguriert. Das Kommunikationsmodul 9 ist für die drahtlose Kommunikation und die drahtlose Übertragung von Daten konfiguriert. In dieser beispielhaften Ausführungsform ist das Kommunikationsmodul 9 innerhalb eines Steuermoduls 17 angeordnet.

Das Trägergestell 5 besteht aus einer Rahmenkonstruktion mit Stützstangen 10. Die Stützstangen 10 können insbesondere aus Aluminium bestehen, das sowohl leicht als auch steif ist.

Sowohl die Empfängereinheit 7 als auch die Emittereinheit 6 sind in Bezug auf das Trägergestell 5 beweglich. Insbesondere kann eine vertikale Position der Empfängereinheit 7 und der Emittereinheit 6 eingestellt werden.

Der mobile Sicherheitsständer 1 weist drei Stützelemente 11 zur Abstützung des mobilen Sicherheitsständers 1 auf einer Fläche (nicht dargestellt) auf. Die Stützelemente 11 sind ausziehbar.

Eine Ausrichtungsunterstützung 12, in diesem Fall eine Wasserwaage, ist vorgesehen. In diesem Ausführungsbeispiel sind sowohl an der Emittereinheit 6 als auch an der Empfängereinheit 7 zwei Ausrichtungsunterstützungen 12 vorgesehen.

In einem Gehäuse 13 befindet sich eine Batterie (nicht dargestellt), die für die Bereitstellung von elektrischer Energie ausgelegt ist.

Der mobile Sicherheitsständer 1 weist mindestens eine, in diesem Beispiel zwei, optische Anzeigeeinheiten 14A und 14B auf, die zur Anzeige eines Betriebszustandes konfiguriert sind.

Die optische Anzeigeeinheit 14A ist so konfiguriert, dass sie einen Betriebszustand der Empfängereinheit 7 anzeigt. Die optische Anzeigeeinheit 14B ist für die Anzeige eines Betriebszustands der Emittereinheit 6 konfiguriert. Die optischen Anzeigeeinheiten 14A und 14B umfassen Statussignale 15 (ähnlich einer Ampel) auf, die anzeigen, ob die Empfängereinheit 7 ein Signal empfängt oder nicht, bzw. ob die Emittereinheit 6 aktiv ist oder nicht.

Am Gehäuse 13 ist ein Warnhinweis 16 lösbar befestigt. Das Gehäuse 13 ist lösbar mit dem Trägergestell 5 verbunden. Der Warnhinweis 16 ist somit lösbar an dem Trägergestell 5 befestigt.

Der mobile Sicherheitsständer 1 weist ein Steuermodul 17 zur Steuerung des mobilen Sicherheitsständers 1, insbesondere der Emittereinheit 6, der Empfängereinheit 7 und des Kommunikationsmoduls 9 auf. Das Steuermodul 17 weist eine Not-Aus-Taste 18 auf, die so konfiguriert ist, dass sie manuell einen Alarm auslöst, zum Beispiel im Falle eines Sicherheitsrisikos. Das Kommunikationsmodul 9 ist so konfiguriert, dass es ein Alarmsignal sendet, wenn die Not-Aus-Taste 18 gedrückt wird.

Das Steuermodul 17 weist eine Deaktivierungssteuerung 19, in diesem Ausführungsbeispiel ein Deaktivierungsknopf, zur Deaktivierung der Empfängereinheit 7 auf. Die Deaktivierungssteuerung 19 kann alternativ oder zusätzlich für die Deaktivierung der Emittereinheit 6 konfiguriert sein.

Das Steuermodul 17 weist ferner eine Kopplungssteuerung 20, in diesem Ausführungsbeispiel ein Kopplungsknopf, auf, um die Empfängereinheit 7 mit einer Emittereinheit 6 eines anderen mobilen Sicherheitsständers zu verbinden. Die Kopplungssteuerung 20 ist so konfiguriert, dass sie die Emittereinheit 6 und die Empfängereinheit 7 deaktiviert und dann beide Einheiten 6 und 7 wieder reaktiviert. Falls eine Gesamtlichtschranke aus mehreren mobilen Sicherheitsständern 1 gebildet wird, kann der Zeitpunkt der Reaktivierung insbesondere genutzt werden, um automatisch zu bestimmen, welche mobilen Sicherheitsständer 1 mittels einer Emittereinheit 6 und einer Empfängereinheit miteinander verbunden sind, die zusammen eine (einen Teil eines) mobilen Sicherheits-Lichtschranken-Systems 31 (s. u.) bilden.

Das Steuermodul 17 weist eine Aktivierungssteuerung 21 zur Aktivierung der Überwachung eines zugangsbeschränkten Bereichs 39 durch eine mobile Sicherheits-Lichtschranke 2 auf, zu welcher der mobile Sicherheitsständer 1 gehören kann. Die Aktivierungssteuerung 21 darf von einem Bediener erst betätigt werden, nachdem er sich vergewissert hat, dass der zugangsbeschränkte Bereich 39 sicher ist und sich keine Personen in dem überwachten, zugangsbeschränkten Bereich 39 aufhalten. Mit anderen Worten, die Aktivierungssteuerung 21 kann zur Initialisierung einer Überwachung und zur Bestätigung der Sicherheit eines Ausgangszustands verwendet werden.

Wie in Figur 2 dargestellt, weist der mobile Sicherheitsständer 1 zwei Griffe 22 zum Halten oder Aufnehmen des mobilen Sicherheitsständers 1 auf. Darüber hinaus weist der mobile Sicherheitsständer 1 eine Anhängerkupplung 23 und eine Kupplung 24 auf. Die Anhängerkupplung 23 des mobilen Sicherheitsständers 1 ist so ausgebildet, dass sie in die Kupplung 24 eines anderen mobilen Sicherheitsständers 1 eingreifen kann, so dass mehrere mobile Sicherheitsständer 1 gleichzeitig bewegt oder geschleppt werden können. Die Kupplung 24 ist in Bezug auf die Basis 3 schwenkbar, so dass die Kupplung 24 nach dem Transport des mobilen Sicherheitsständers 1 in einer (aufrechten) Position gelagert werden kann.

Die Figuren 3 und 4 zeigen ein mobiles Bausystem 25 mit einem mobilen Bauroboter 26, bestehend aus:
- einer Roboterbasis 27 mit einem Antriebssystem 28 zum Bewegen des mobilen Bauroboters 26 auf einer Fläche; und
- einer Datenempfangseinheit 29 (innerhalb eines Robotergehäuses 30).

Darüber hinaus weist das mobile Bausystem 25 ein mobiles Sicherheits-Lichtschranken-System 31 auf. Das Kommunikationsmodul 9 ist zur Übermittlung der Daten an die Datenempfangseinheit 29 ausgebildet, wobei der optische Bildgebungs- und/oder Näherungssensor 8 zur Überwachung des mobilen Bauroboters 26 ausgebildet ist.

Das mobile Sicherheits-Lichtschranken-System 31 weist den in den Figuren 1 und 2 dargestellten mobilen Sicherheitsständer 1 auf. Darüber hinaus weist das mobile Sicherheits-Lichtschranken-System 31 drei weitere mobile Sicherheitsständer 32 auf, bestehend aus:
- einer weiteren Basis 33 mit mindestens einem weiteren Rad 34 zum Bewegen des weiteren mobilen Sicherheitsständers 32;
- einem weiteren Trägergestell 35, das an der weiteren Basis 33 befestigt ist;
- einer weiteren Emittereinheit 36, die zum Aussenden von elektromagnetischer Strahlung (angedeutet durch die horizontalen Linien 37) konfiguriert ist, wobei die weitere Emittereinheit 36 an dem weiteren Trägergestell 35 angeordnet ist, wobei die weitere Emittereinheit 36 in Bezug auf das weitere Trägergestell 35 schwenkbar ist;
wobei die weitere Emittereinheit 36 und die Empfängereinheit 7 so ausgerichtet sind, dass die Empfängereinheit 7 so eingerichtet ist, dass sie elektromagnetische Strahlung von der weiteren Emittereinheit 36 empfängt, wobei die weitere Emittereinheit 36 und die Empfängereinheit 7 eine mobile Sicherheits-Lichtschranke 2 bilden.

Der weitere mobile Sicherheitsständer 32 weist keinen optischen Bildgebungs- und/oder einen Näherungssensor auf. Bis auf den optischen Bildgebungs- und/oder Näherungssensor ist der weitere mobile Sicherheitsständer mit dem mobilen Sicherheitsständer 1 identisch. So sind beispielsweise die weitere Empfängereinheit 38 und die Empfängereinheit 7 identisch. Wird z. B. der optische Bildgebungs- und/oder Näherungssensor 8 aus dem mobilen Sicherheitsständer 1 entfernt, ist bzw. wird der mobile Sicherheitsständer 1 ein weiterer mobiler Sicherheitsständer 32.

In dieser beispielhaften Ausführungsform weist das mobile Sicherheits-Lichtschranken-System 31 drei weitere mobile Sicherheitsständer 32 auf. Die drei weiteren mobilen Sicherheitsständer 32 bilden zusammen mit dem mobilen Sicherheitsständer 1 insgesamt vier mobile Sicherheits-Lichtschranken 2, die einen zugangsbeschränkten Bereich 39 umschließen, in dem der mobile Bauroboter 26 arbeiten kann.

Wird eine der mobilen Sicherheits-Lichtschranken 2 durchbrochen, z. B. durch einen Bauarbeiter, der den zugangsbeschränkten Bereich 39 betritt, wird das Signal der jeweiligen Empfängereinheit 7 und/oder der weiteren Empfängereinheit 38 unterbrochen. Das jeweilige Kommunikationsmodul 9 (entweder des mobilen Sicherheitsständers 1 oder eines der weiteren mobilen Sicherheitsständer 32) sendet ein Durchbruchsignal an den mobilen Bauroboter 26. Der mobile Bauroboter 26 ist so konfiguriert, dass er seinen Betrieb nach Erhalt des Durchbruchsignals stoppt.

In diesem Beispiel weist der mobile Bauroboter 26 einen Roboterarm 40 mit einem Endeffektor 41 auf. Der Endeffektor 41 weist einen Bohrer 42 auf. Der mobile Bauroboter 26 ist so konfiguriert, dass er auf der Baustelle innerhalb des zugangsbeschränkten Bereichs 39 Löcher bohrt.

Ein Verfahren zum Betrieb des mobilen Bausystems 25 weist die folgenden Schritte auf:
- Bereitstellen des mobilen Bauroboters 26 in einem Baubereich (in diesem Fall dem zugangsbeschränkten Bereich 39) auf einer Baustelle;
- Anordnen des mobilen Sicherheits-Lichtschranken-Systems 31 auf der Baustelle, wobei das mobile Sicherheits-Lichtschranken-System 31 den Baubereich von einem Sicherheitsbereich, dem zugangsbeschränkten Bereich 39, (in dem sich z.B. kein Roboter befindet) trennt;
- Überwachung des mobilen Bauroboters 26 mit Hilfe des optischen Bildgebungs-und/oder Näherungssensors 8;
- Erzeugen eines Durchbruchssignals durch das mobile Sicherheits-Lichtschranken-System 31, wobei das Durchbruchssignal durch eine Unterbrechung der empfangenen elektromagnetischen Strahlung an der Empfängereinheit 7 ausgelöst wird, wobei die Daten das Durchbruchssignal aufweisen;
- Übertragen der Daten an die Datenempfangseinheit 29 des mobilen Bauroboters 26.

Der mobile Bauroboter 26 weist eine Steuereinheit (nicht dargestellt; angeordnet im Robotergehäuse 30) zur Steuerung des mobilen Bauroboters 26 auf. Das Verfahren weist die folgenden Schritte auf:
- Empfangen des Durchbruchsignals durch die Steuereinheit;
- Einschränken und/oder Anhalten eines Betriebs und/oder einer Bewegung des mobilen Bauroboters 26 als Reaktion auf den Empfang des Durchbruchsignals.

### Bezugszeichenliste

- 1: mobiler Sicherheitsständer
- 2: mobile Sicherheits-Lichtschranke
- 3: Basis
- 4: Rad
- 5: Trägergestell
- 6: Emittereinheit
- 7: Empfängereinheit
- 8: optischer Bildgebungs- und/oder Näherungssensor
- 9: Kommunikationsmodul
- 10: Stützstangen
- 11: Stützelemente
- 12: Ausrichtungsunterstützung
- 13: Gehäuse
- 14A: Anzeigeeinheit für einen Betriebszustand der Empfängereinheit 7
- 14B: Anzeigeeinheit für einen Betriebszustand der Emittereinheit 6
- 15: Statussignale
- 16: Warnhinweis
- 17: Steuermodul
- 18: Not-Aus-Taste
- 19: Deaktivierungssteuerung
- 20: Kopplungssteuerung
- 21: Aktivierungssteuerung
- 22: Griffe
- 23: Anhängerkupplung
- 24: Kupplung
- 25: mobiles Bausystem
- 26: mobiler Bauroboter
- 27: Roboterbasis
- 28: Antriebssystem
- 29: Datenempfangseinheit
- 30: Robotergehäuse
- 31: mobiles Sicherheits-Lichtschranken-System
- 32: weiterer mobiler Sicherheitsständer
- 33: weitere Basis
- 34: weiteres Rad
- 35: weiteres Trägergestell
- 36: weitere Emittereinheit
- 37: horizontale Linien
- 38: weitere Empfängereinheit
- 39: zugangsbeschränkter Bereich
- 40: Roboterarm
- 41: Endeffektor
- 42: Bohrer

## Patentansprüche

1. Mobiler Sicherheitsständer (1) für eine mobile Sicherheits-Lichtschranke (2) aufweisend:
- eine Basis (3) mit mindestens einem Rad (4) zum Bewegen des mobilen Sicherheitsständers (1) auf einer Fläche;
- ein Trägergestell (5), das an der Basis (3) befestigt ist;
- eine Emittereinheit (6), insbesondere mit einem Laserstrahler, die zum Aussenden elektromagnetischer Strahlung ausgebildet ist, wobei die Emittereinheit (6) an dem Trägergestell (5) angeordnet ist, wobei die Emittereinheit (6) gegenüber dem Trägergestell (5) schwenkbar ist; und/oder
- eine Empfängereinheit (7), die zum Empfangen elektromagnetischer Strahlung konfiguriert ist, wobei die Empfängereinheit (7) an dem Trägergestell (5) angeordnet ist, wobei die Empfängereinheit (7) gegenüber dem Trägergestell (5) schwenkbar ist;
- einem auf dem Trägergestell (5) angeordneten optischen Bildgebungs- und/oder Näherungssensor (8), insbesondere einer Kamera, einem Radarsensor oder einem Lidarsensor, wobei der optische Bildgebungs- und/oder Näherungssensor (8) gegenüber dem Trägergestell (5) schwenkbar ist; und
- ein Kommunikationsmodul (9), das zum Empfangen von Daten von der Empfängereinheit (7) und dem optischen Bildgebungs- und/oder Näherungssensor (8) und zum Übertragen der Daten eingerichtet ist.

2. Mobiler Sicherheitsständer (1) nach Anspruch 1, **dadurch gekennzeichnet, dass** die Empfängereinheit (7) und/oder die Emittereinheit (6) gegenüber dem Trägergestell (5) beweglich ist/sind.

3. Mobiler Sicherheitsständer (1) nach Anspruch 1 oder Anspruch 2, **dadurch gekennzeichnet, dass** der mobile Sicherheitsständer (1) drei Stützelemente (11) zum Abstützen des mobilen Sicherheitsständers (1) auf der Fläche aufweist, wobei die Stützelemente (11) ausziehbar sind.

4. Mobiler Sicherheitsständer (1) nach einem der Ansprüche 1 bis 3, **dadurch gekennzeichnet, dass** der mobile Sicherheitsständer (1) eine Ausrichtungsunterstützung (12) aufweist, insbesondere eine Wasserwaage.

5. Mobiler Sicherheitsständer (1) nach einem der Ansprüche 1 bis 4, **dadurch gekennzeichnet, dass** der mobile Sicherheitsständer (1) eine Batterie für die Bereitstellung von elektrischer Energie aufweist.

6. Mobiler Sicherheitsständer (1) nach einem der Ansprüche 1 bis 5, **dadurch gekennzeichnet, dass** der mobile Sicherheitsständer (1) eine optische Markierung, insbesondere ein Prisma, zur Verfolgung mit einem Tachymeter aufweist, wobei die optische Markierung auf dem Trägergestell angeordnet ist.

7. Mobiler Sicherheitsständer (1) nach einem der Ansprüche 1 bis 6, **dadurch gekennzeichnet, dass** der mobile Sicherheitsständer (1) ein Tachymeter zur Verfolgung einer optischen Markierung aufweist, wobei das Tachymeter auf dem Trägergestell (5) angeordnet ist.

8. Mobiler Sicherheitsständer (1) nach einem der Ansprüche 1 bis 7, **dadurch gekennzeichnet, dass** der mobile Sicherheitsständer (1) mindestens eine optische Anzeigeeinheit (14A und/oder 14B) aufweist, die zur Anzeige eines Betriebszustandes ausgebildet ist.

9. Mobiler Sicherheitsständer (1) nach einem der Ansprüche 1 bis 8, **dadurch gekennzeichnet, dass** der mobile Sicherheitsständer (1) ein Audiosignalsystem aufweist, das zur Abgabe eines Audiosignals ausgebildet ist.

10. Mobiler Sicherheitsständer (1) nach einem der Ansprüche 1 bis 9, **dadurch gekennzeichnet, dass** der mobile Sicherheitsständer (1) mindestens einen Warnhinweis (16), insbesondere ein Warnschild aufweist, wobei der mindestens eine Warnhinweis (16) lösbar an dem Trägergestell (5) befestigt ist.

11. Mobiles Sicherheits-Lichtschranken-System (31), aufweisend:
- einen ersten mobilen Sicherheitsständer (1) nach einem der Ansprüche 1 bis 10 mit einer Empfängereinheit (7);
- mindestens einen weiteren mobilen Sicherheitsständer (32), aufweisend:
- eine weitere Basis (33) mit mindestens einem weiteren Rad (34) zum Bewegen des weiteren mobilen Sicherheitsständers (32);
- ein weiteres Trägergestell (35), das an der weiteren Basis (33) befestigt ist;
- eine weitere Emittereinheit (36), die zum Aussenden elektromagnetischer Strahlung konfiguriert ist, wobei die weitere Emittereinheit (36) an dem weiteren Trägergestell (35) angeordnet ist, wobei die weitere Emittereinheit (36) gegenüber dem weiteren Trägergestell (35) schwenkbar ist;
wobei die weitere Emittereinheit (36) und die Empfängereinheit (7) so ausgerichtet sind, dass die Empfängereinheit (7) so konfiguriert ist, dass sie elektromagnetische Strahlung von der weiteren Emittereinheit (36) empfängt, wobei die weitere Emittereinheit (36) und die Empfängereinheit (7) eine mobile Sicherheits-Lichtschranke (2) bilden.

12. Mobiles Bausystem (25) mit einem mobilen Bauroboter (26), aufweisend:
- eine Roboterbasis (27) mit einem Antriebssystem (28) zum Bewegen des mobilen Bauroboters (26) auf einer Fläche; und
- eine Datenempfangseinheit (29); **gekennzeichnet durch** ein mobiles Sicherheits-Lichtschranken-System (31) nach Anspruch 11, wobei das Kommunikationsmodul (9) zum Übertragen der Daten an die Datenempfangseinheit (29) ausgebildet ist und wobei der optische Bildgebungs- und/oder Näherungssensor (8) zum Überwachen des mobilen Bauroboters (26) ausgebildet ist.

13. Mobiles Bausystem (25) nach Anspruch 12, **dadurch gekennzeichnet, dass** das mobile Bausystem (25) einen mobilen Sicherheitsständer (1) nach Anspruch 7 aufweist, wobei der mobile Bauroboter (26) eine optische Robotermarkierung aufweist, wobei der weitere mobile Sicherheitsständer (32) eine weitere optische Markierung aufweist, wobei das Tachymeter zur Verfolgung der weiteren optischen Markierung und der optischen Robotermarkierung und zur Bestimmung einer Position der optischen Robotermarkierung relativ zum mobilen Sicherheits-Lichtschranken-System (31) ausgebildet ist.

14. Verfahren zum Betreiben des mobilen Bausystems (25) nach Anspruch 12 oder Anspruch 13, bestehend aus folgenden Schritten:
- Bereitstellen des mobilen Bauroboters (26) in einem Baubereich auf einer Baustelle;
- Anordnen des mobilen Sicherheits-Lichtschranken-Systems (31) an der Baustelle, wobei das mobile Sicherheits-Lichtschranken-System (31) den Baubereich von einem Sicherheitsbereich, dem zugangsbeschränkten Bereich (39), trennt;
- Überwachen des Bauroboters (26) mit Hilfe des optischen Bildgebungs- und/oder Näherungssensors (8);
- Erzeugen von Daten aufweisend ein Durchbruchssignal durch das mobile Sicherheits-Lichtschranken-System (31), wobei das Durchbruchssignal durch eine Unterbrechung der empfangenen elektromagnetischen Strahlung an der Empfängereinheit (7) ausgelöst wird;
- Übertragen der Daten an die Datenempfangseinheit (29) des mobilen Bauroboters (26).

15. Verfahren nach Anspruch 14, wobei der mobile Bauroboter (26) eine Steuereinheit zur Steuerung des mobilen Bauroboters (26) aufweist, mit den weiteren Schritten:
- Empfangen des Durchbruchsignals durch die Steuereinheit;
- Einschränken und/oder Anhalten eines Betriebs und/oder einer Bewegung des mobilen Bauroboters (26) in Reaktion auf den Empfang des Durchbruchsignals.
